# EUROPEAN PATENT SPECIFICATION

(11) **EP 4 440 811 B1**
(45) Date of publication and mention of the grant of the patent: **22.10.2025**
(21) Application number: 22818321.6
(22) Date of filing: 16.11.2022
(51) Int. Cl.: B29C 49/42, B29C 49/64, B29C 49/06, B29L 31/00

(54) **APPARATUS FOR THE TREATMENT OF PREFORMS**
VORRICHTUNG ZUR BEHANDLUNG VON VORFORMLINGEN
APPAREIL DE TRAITEMENT DE PRÉFORMES

(30) Priority: 02.12.2021 IT 202100030524
(43) Date of publication of application: 09.10.2024
(73) Proprietor: Acmi Beverage S.p.a., 43058 Sorbolo (Parma) (IT)
(72) Inventor: ZANELLI, Matteo, 40026 Imola (IT)
(74) Representative: Modiano, Micaela Nadia
(86) International application number: PCT/EP2022/082118
(87) International publication number: WO 2023/099214

(56) References cited:
- EP-A1- 3 549 744
- US-A1- 2014 232 045
- US-B1- 6 779 651
- US-B2- 9 045 284

## Description

The present invention relates to an apparatus for the treatment of preforms.

Units for blow molding plastic containers, comprising an apparatus for blow molding preforms so as to obtain containers such as for example bottles, are known.

The preforms are fed to the preform blow molding apparatus by a conveyor associated with a preform thermal conditioning oven.

The conveyor is normally associated with a preform transfer device, constituted by, for example, a handling device, which picks up the preforms from the conveyor to transfer them to the preform blow molding apparatuses.

The conveyor is also associated in input with an additional transfer device, designed to pick up the preforms from a supply line to transfer them to the conveyor.

The transfer device is also normally constituted by a handling device provided with preform grippers.

Known solutions, while widely used, are not without drawbacks, however.

In particular, the handling of preforms, to be heated or already heated, by the handling devices may have critical elements that in some cases can ruin the preforms.

Moreover, the use of handling devices with grippers may have limitations if the preforms have considerably large mouths.

Moreover, in known solutions, it is necessary to use respective handling devices both upstream and downstream of the conditioning oven. Related prior art systems are described in US2014/232045A1, EP3549744A1, US9045284B2 and US6779651B1.

The aim of the present invention is to provide an apparatus for the treatment of preforms that is capable of improving the background art in one or more of the aspects indicated above.

Within this aim, an object of the invention is to provide an apparatus for the treatment of preforms that allows to pick up and discharge preforms, even with non-standardized shapes, efficiently and reliably.

Not least object of the invention is to provide an apparatus for the treatment of preforms that is highly reliable, relatively easy to provide, and at competitive costs.

This aim, as well as these and other objects that will become better apparent hereinafter, are achieved by an apparatus for the treatment of preforms according to claim 1, optionally provided with one or more of the characteristics of the dependent claims.

Further characteristics and advantages of the invention will become better apparent from the description of some preferred but not exclusive embodiments of the apparatus for the treatment of preforms according to the invention, illustrated by way of non-limiting example in the accompanying drawings, wherein:

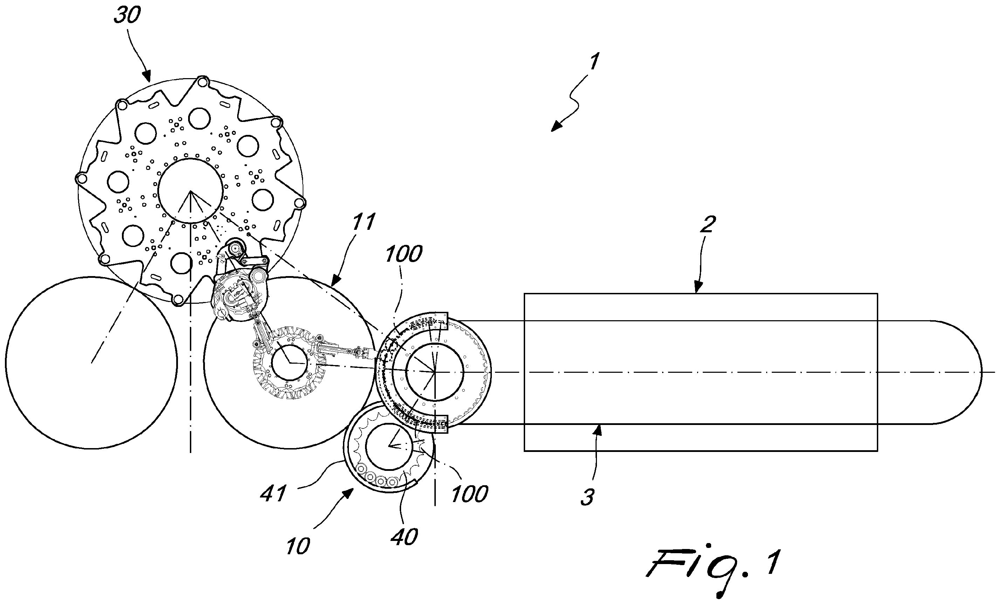

Figure 1 is a top plan view of a preform blow molding unit;

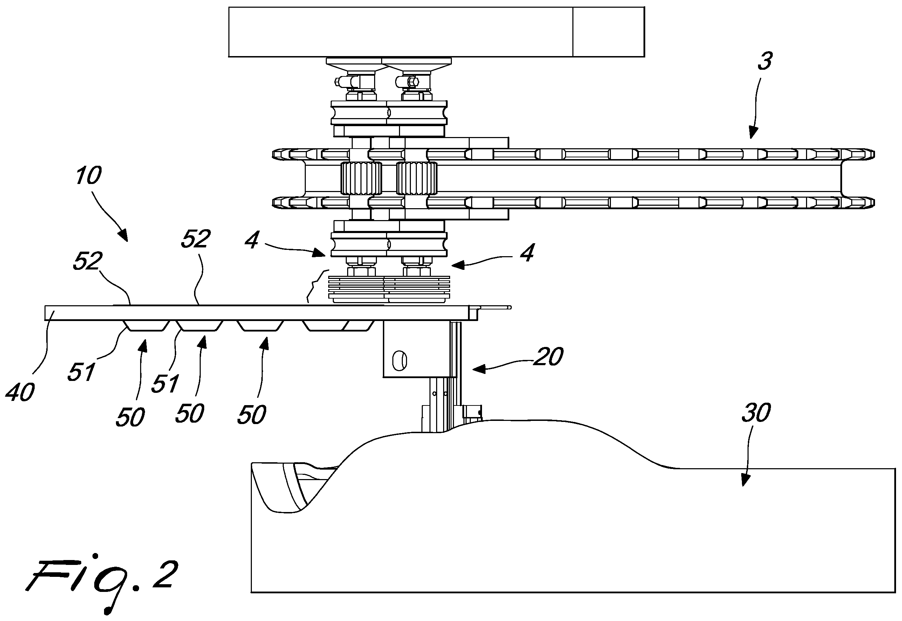

Figure 2 is a side view of the apparatus for the treatment of preforms at the region for the transfer of the preforms from the supply line to the closed conveyance circuit;

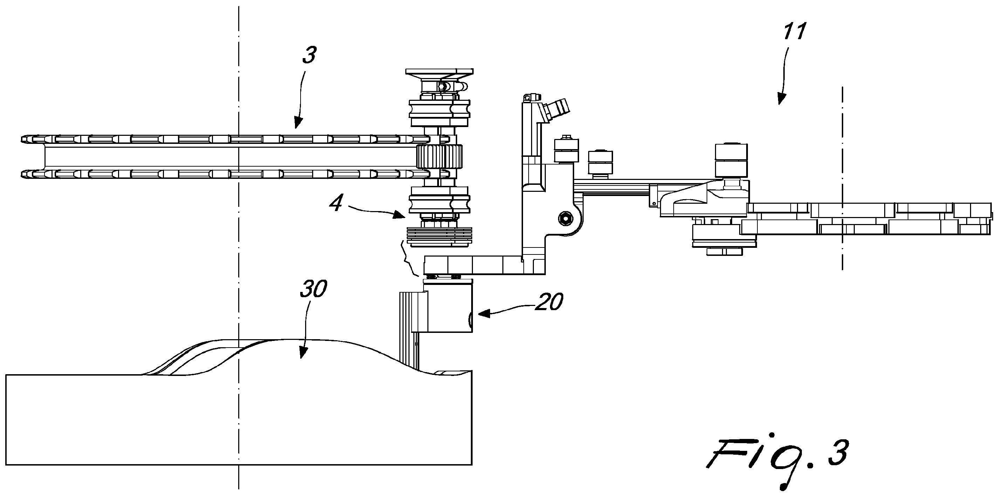

Figure 3 is a view, similar to the preceding one, of the apparatus for the treatment of preforms at the region for the transfer of the preforms from the closed conveyance circuit to the discharge line;

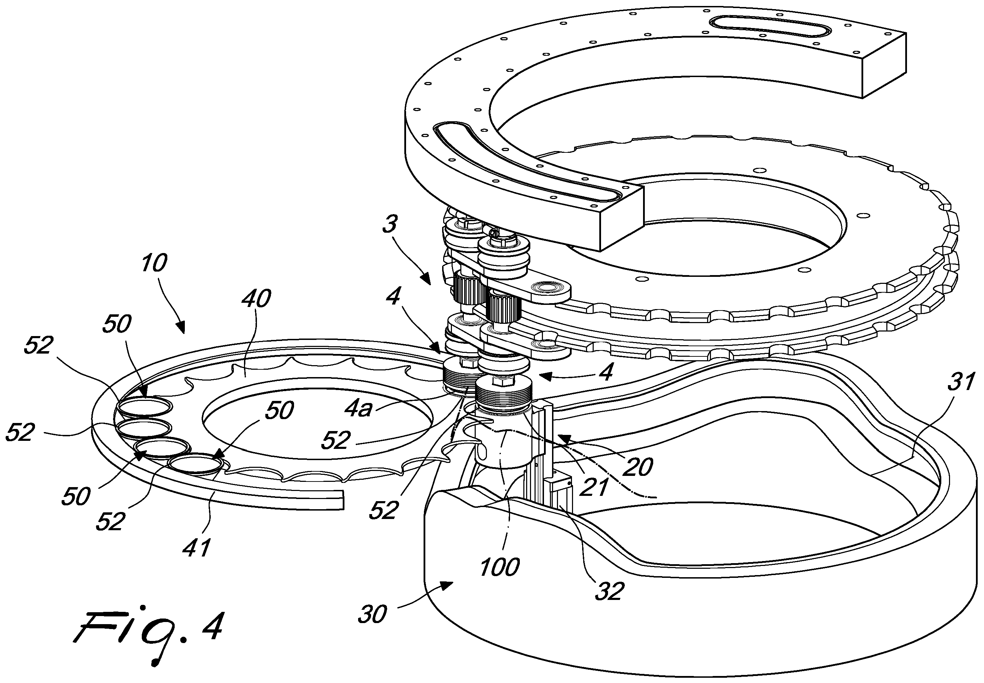

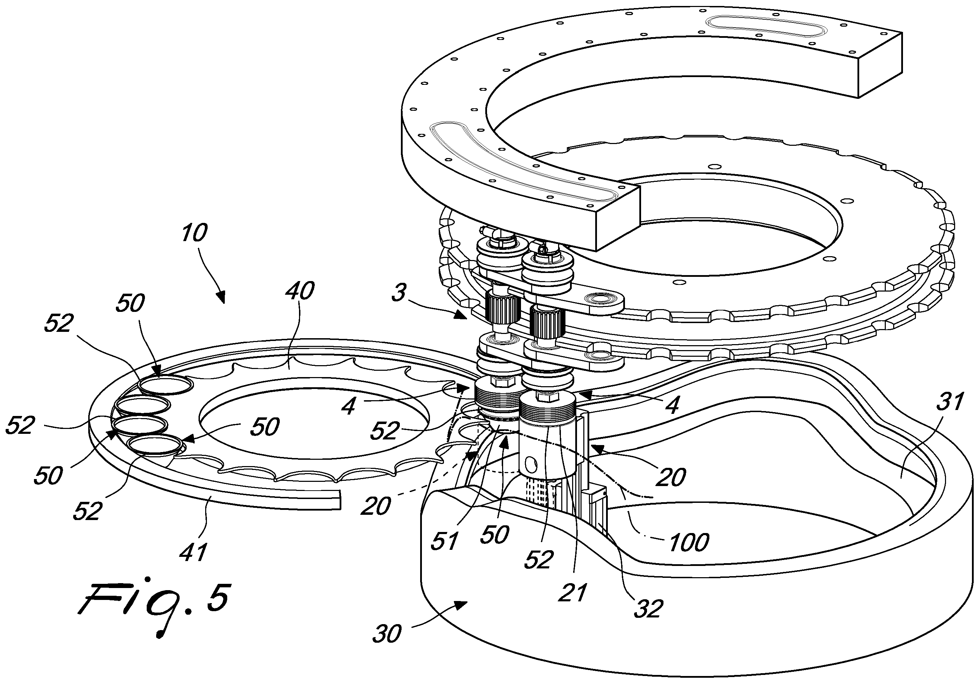

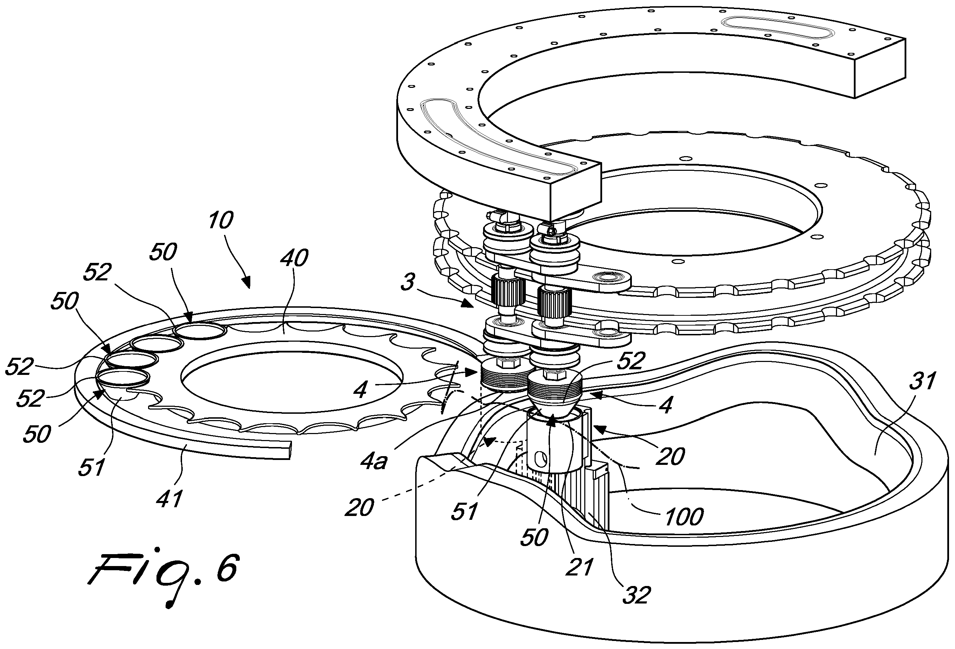

Figures 4 to 6 are perspective views of the step of transferring the preforms from the supply line to the closed conveyance circuit;

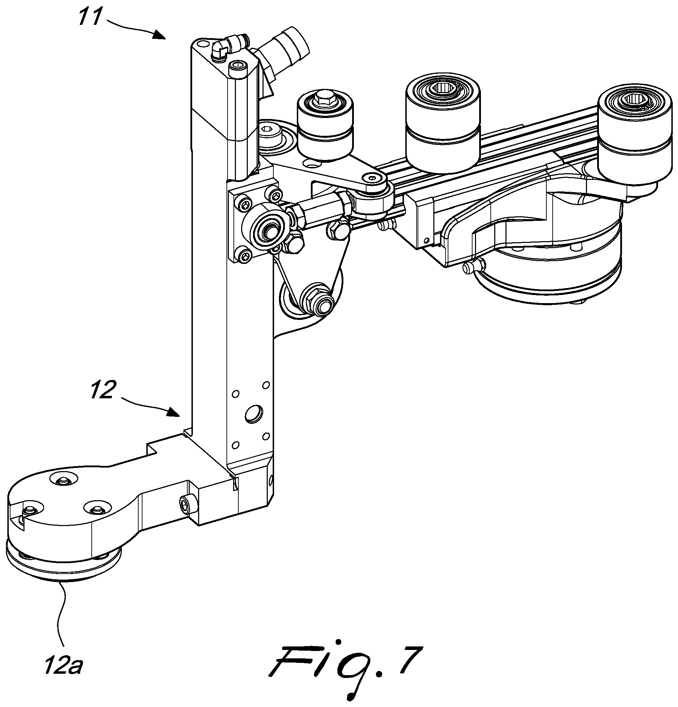

Figure 7 is a perspective view of a constructive variation of the discharge element.

The apparatus for the treatment of plastic preforms, generally designated by the reference numeral 1, comprises a supply line 10 of preforms 50, which comprise a preform body 51 and a preform mouth 52.

The supply line 10 is arranged upstream of an oven 2 for conditioning the preforms 50.

The apparatus 1 comprises a discharge line 11 for the preforms 50, which is arranged downstream of the conditioning oven 2 and is designed to feed the preforms 50 to a blow molding carousel 30.

The conditioning oven 2 is associated with a closed conveyance circuit 3 comprising a plurality of grip elements 4 configured to retain respective preforms 50.

According to a further aspect, the element 20 for transferring the preforms 50 is arranged between the supply line 10 and the closed conveyance circuit 3 and/or between the closed conveyance circuit 3 and the discharge line 11.

In particular, the apparatus 1 is provided with a plurality of transfer elements 20, which are mutually spaced apart and each designed to pick up a respective preform 50.

Each transfer element 20 forms at least one supporting portion 21 for a portion of a respective preform 50.

In particular, each transfer element 20 is movable along a movement trajectory 100 between a position for picking up the preform 50 and a position for releasing the preform 50; specifically, the movement trajectory 100 has a first movement component on a horizontal plane and a second movement component along a substantially vertical axis.

Advantageously, the transfer element 20 is movable, along the respective movement trajectory 100, between a first pick-up position, defined at the supply line 10, and a first release position, defined at a first region of the conveyance circuit 3 which is arranged upstream of the conditioning oven 2, and between a second pick-up position, defined at a second region of the conveyance circuit 3 arranged downstream of the conditioning oven 2, and a second release position, defined at the discharge line 11.

This solution allows to perform, with the transfer elements 20, both the transfer of the preforms 50 from the supply line to the conveyance circuit 3 and the transfer of the preforms 50 from the conveyance circuit 3 to the discharge line 11.

Conveniently, the grip elements 4 support a retention body 4a configured to stably retain the preform 50 substantially at the region of the mouth of the preform 52.

The discharge line 11 comprises at least one discharge element 12 which comprises a coupling element 12a configured to stably retain the preform 50 substantially at the region of the preform mouth 52.

Preferably, the movement trajectory 100 of the transfer element 20 forms a closed circuit.

In this regard, there is a supporting structure 30 which forms a cam 31, which is slidingly engageable by an engagement element 32 which supports the transfer element 20 in order to actuate, during the movement of the engagement element 32, the movement in the vertical direction of the engagement element 32.

According to a preferred embodiment, the retention body 4a, during its movement along the closed conveyance circuit 3, is kept at a fixed height.

Advantageously, the lower portion of the retention body 4a is arranged at a higher elevation than the height of arrangement of the mouth of the preform 51, at least between the pick-up position and the release position.

The operation of the apparatus 1, according to the invention, is as follows.

The preforms 50 are fed, via the supply line 10, to the conditioning oven 2.

In particular, the preforms 50 are transferred, at the first pick-up position defined at the supply line 10, to a respective pick-up element 20, arranged in a lower region, which by moving along the movement trajectory 100 transfers it toward the first release position defined at a first region of the conveyance circuit 3 arranged upstream of the conditioning oven 2.

At this first release position, the pick-up element 20 is arranged below a respective grip element 4, which picks up the preform 50 to transfer it along the closed conveyance circuit 3 to the conditioning oven 2.

In output from the conditioning oven 2, the preforms, carried by the grip elements 4, move toward the second defined pick-up position, at which a respective pick-up element 20, arranged downward, accommodates the respective preform to transfer it, at the second release position, to the discharge line 11.

In practice it has been found that the invention achieves the intended aim and objects, providing a container blow molding unit that allows to feed preforms of different diameters and shapes, without having to engage on the outer surface of the preform.

In practice, the materials used, so long as they are compatible with the specific use, as well as the contingent shapes and dimensions, may be any according to the requirements and the state of the art.

The disclosures in Italian Patent Application No. 102021000030524 from which this application claims priority is referred to.

## Claims

1. An apparatus (1) for the treatment of plastic preforms, which comprises a line (10) for the supply of preforms (50), which comprise a preform body (51) and a preform mouth (52), said supply line (10) being arranged upstream of a conditioning oven (2) for the conditioning of said preforms (50), a line (11) for the discharge of said preforms (50) being provided which is arranged downstream of said conditioning oven (2) and is designed to feed said preforms (50) to a blow molding carousel (30), said conditioning oven (2) being associated with a closed conveyance circuit (3) which comprises a plurality of grip elements (4) configured to retain respective preforms (50), **characterized in that** it comprises at least one element (20) for the transfer of said preforms (50) which is arranged between said closed conveyance circuit (3) and said discharge line (11), said at least one transfer element (20) forming at least one supporting portion (21) for a portion of said preform (50), said at least one transfer element (20) being movable along a trajectory (100) for movement between a position for the pickup of said preform (50) and a position for the release of said preform (50), said movement trajectory (100) having a first movement component on a horizontal plane and a second movement component along a substantially vertical axis.

2. The apparatus (1) according to claim 1, **characterized in that** said at least one transfer element (20) can move, along the respective movement trajectory (100), between a first pickup position, which is defined at said supply line (10), and a first release position, which is defined at a first region of said conveyance circuit (3) which is arranged upstream of said conditioning oven (2), and between a second pickup position, which is defined at a second region of said conveyance circuit (3) which is arranged downstream of said conditioning oven (2), and a second release position, which is formed at said discharge line (11).

3. The apparatus (1) according to one or more of the preceding claims, **characterized in that** said grip elements (4) support a retention body (4a) which is configured to stably retain said preform (50) substantially at the region of the mouth of the preform (52).

4. The apparatus (1) according to one or more of the preceding claims, **characterized in that** said discharge line (11) comprises at least one discharge element (12) which comprises a coupling element (12a) configured to stably retain said preform (50) substantially at the region of the mouth of the preform (52).

5. The apparatus (1) according to one or more of the preceding claims, **characterized in that** said movement trajectory (100) of said transfer element (20) defines a closed circuit, a supporting structure (30) being provided which forms a cam (31) which can be engaged slidingly by an engagement element (32) which supports said transfer element (20) in order to actuate, during the movement of said engagement element (20), the movement in a vertical direction of said engagement element (20).

6. The apparatus (1) according to one or more of the preceding claims, **characterized in that** said retention body (4a), during its movement along said closed conveyance circuit (3), is kept at a fixed height.

7. The apparatus (1) according to one or more of the preceding claims, **characterized in that** the lower portion of the retention body (4a) is arranged at a greater height than the height of arrangement of the mouth of the preform (51) between said pickup position and said release position.

## Patentansprüche

1. Eine Vorrichtung (1) zur Behandlung von Kunststoff-Vorformlingen, die eine Linie (10) für die Zufuhr von Vorformlingen (50) umfasst, welche einen Vorformlingkörper (51) und eine Vorformlingöffnung (52) umfassen; wobei die Zuführlinie (10) stromaufwärts von einem Behandlungsofen (2) für die Behandlung der Vorformlinge (50) angeordnet ist, wobei eine Linie (11) zum Abladen der Vorformlinge (50) bereitgestellt ist, die stromabwärts von dem Behandlungsofen (2) angeordnet und konstruiert ist, um die Vorformlinge (50) einem Blasformkarussell (30) zuzuführen; wobei der Behandlungsofen (2) mit einem geschlossenen Förderkreislauf (3) verbunden ist, welcher eine Vielzahl von Greifelementen (4) umfasst, die ausgebildet sind, um entsprechende Vorformlinge (50) zu halten; **dadurch gekennzeichnet, dass** sie mindestens ein Element (20) für die Überführung der Vorformlinge (50) umfasst, welches zwischen dem geschlossenen Förderkreislauf (3) und der Abladelinie (11) angeordnet ist; wobei das mindestens eine Überführungselement (20) mindestens einen tragenden Abschnitt (21) für einen Teil des Vorformlings (50) bildet; wobei das mindestens eine Überführungselement (20) entlang einer Trajektorie (100) beweglich ist zum Bewegen zwischen einer Position zum Aufnehmen des Vorformlings (50) und einer Position zum Loslassen des Vorformlings (50); wobei die Bewegungstrajektorie (100) eine erste Bewegungskomponente auf einer horizontalen Ebene und eine zweite Bewegungskomponente entlang einer im Wesentlichen vertikalen Achse hat.

2. Die Vorrichtung (1) gemäß Anspruch 1, **dadurch gekennzeichnet, dass** das mindestens eine Überführungselement (20) sich entlang der entsprechenden Bewegungstrajektorie (100) zwischen einer ersten Aufnahmeposition, die an der Zuführlinie (10) bestimmt ist, und einer ersten Loslassposition bewegen kann, die in einem ersten Bereich des Förderkreislaufs (3) bestimmt ist, welcher stromaufwärts von dem Behandlungsofen (2) angeordnet ist, und zwischen einer zweiten Aufnahmeposition, die in einem zweiten Bereich des Förderkreislaufs (3) bestimmt ist, welcher stromabwärts von dem Behandlungsofen (2) angeordnet ist, und einer zweiten Loslassposition, die an der Abladelinie (11) geformt ist.

3. Die Vorrichtung (1) gemäß einem oder mehreren der obigen Ansprüche, **dadurch gekennzeichnet, dass** die Greifelemente (4) einen Haltekörper (4a) tragen, der ausgebildet ist, um den Vorformling (50) im Wesentlichen im Bereich der Öffnung des Vorformlings (52) sicher zu halten.

4. Die Vorrichtung (1) gemäß einem oder mehreren der obigen Ansprüche, **dadurch gekennzeichnet, dass** die Abladelinie (11) mindestens ein Abladeelement (12) umfasst, das ein Kopplungselement (12a) umfasst, welches ausgebildet ist, um den Vorformling (50) im Wesentlichen im Bereich der Öffnung des Vorformlings (52) sicher zu halten.

5. Die Vorrichtung (1) gemäß einem oder mehreren der obigen Ansprüche, **dadurch gekennzeichnet, dass** die Bewegungstrajektorie (100) des Überführungselements (20) einen geschlossenen Kreislauf bestimmt, wobei eine tragende Struktur (30) bereitgestellt ist, die einen Nocken (31) bildet, in welchen ein Eingriffselement (32) gleitend eingreifen kann, welches das Überführungselement (20) trägt, um während der Bewegung des Eingriffselements (20) die Bewegung des Eingriffselements (20) in eine vertikale Richtung auszulösen.

6. Die Vorrichtung (1) gemäß einem oder mehreren der obigen Ansprüche, **dadurch gekennzeichnet, dass** der Haltekörper (4a) während seiner Bewegung entlang dem geschlossenen Förderkreislauf (3) auf einer festen Höhe gehalten wird.

7. Die Vorrichtung (1) gemäß einem oder mehreren der obigen Ansprüche, **dadurch gekennzeichnet, dass** sich der untere Abschnitt des Haltekörpers (4a) zwischen der Aufnahmeposition und der Loslassposition auf einer Höhe befindet, die größer ist als die Höhe der Anordnung der Öffnung des Vorformlings (51).

## Revendications

1. Appareil (1) pour le traitement de préformes en plastique, qui comprend une ligne (10) pour l'alimentation en préformes (50), qui comprennent un corps de préforme (51) et une bouche de préforme (52), ladite ligne d'alimentation (10) étant disposée en amont d'un four de conditionnement (2) pour le conditionnement desdites préformes (50), une ligne (11) pour le déchargement desdites préformes (50) étant prévue, qui est disposée en aval dudit four de conditionnement (2) et est conçue pour alimenter lesdites préformes (50) vers un carrousel de moulage par soufflage (30), ledit four de conditionnement (2) étant associé à un circuit de transport fermé (3) qui comprend une pluralité d'éléments de préhension (4) configurés pour retenir les préformes respectives (50), **caractérisé en ce qu'**il comprend au moins un élément (20) pour le transfert desdites préformes (50) qui est disposé entre ledit circuit de transport fermé (3) et ladite ligne de déchargement (11), ledit au moins un élément de transfert (20) formant au moins une partie de support (21) pour une partie de ladite préforme (50), ledit au moins un élément de transfert (20) étant mobile le long d'une trajectoire (100) pour se déplacer entre une position de prélèvement de ladite préforme (50) et une position de libération de ladite préforme (50), ladite trajectoire de déplacement (100) ayant une première composante de mouvement dans un plan horizontal et une seconde composante de mouvement le long d'un axe sensiblement vertical.

2. L'appareil (1) selon la revendication 1, **caractérisé en ce que** ledit au moins un élément de transfert (20) peut se déplacer, le long de la trajectoire de déplacement respective (100), entre une première position de prélèvement, qui est définie au niveau de ladite ligne d'alimentation (10), et une première position de libération, qui est définie au niveau d'une première région dudit circuit de transport (3) qui est agencée en amont dudit four de conditionnement (2), et entre une deuxième position de prélèvement, qui est définie au niveau d'une deuxième région dudit circuit de transport (3) qui est disposée en aval dudit four de conditionnement (2), et une deuxième position de libération, qui est formée au niveau de ladite ligne de déchargement (11).

3. L'appareil (1) selon une ou plusieurs des revendications précédentes, **caractérisé en ce que** lesdits éléments de préhension (4) supportent un corps de retenue (4a) qui est configuré pour retenir de manière stable ladite préforme (50) sensiblement au niveau de la région de la bouche de la préforme (52).

4. L'appareil (1) selon une ou plusieurs des revendications précédentes, **caractérisé en ce que** ladite ligne de décharge (11) comprend au moins un élément de décharge (12) qui comprend un élément d'accouplement (12a) configuré pour retenir de manière stable ladite préforme (50) sensiblement au niveau de la région de la bouche de la préforme (52).

5. L'appareil (1) selon une ou plusieurs des revendications précédentes, **caractérisé en ce que** ladite trajectoire de déplacement (100) dudit élément de transfert (20) définit un circuit fermé, une structure de support (30) étant prévue qui forme une came (31) qui peut être engagée de manière coulissante par un élément d'engagement (32) qui supporte ledit élément de transfert (20) afin d'actionner, pendant le mouvement dudit élément d'engagement (20), le mouvement dans une direction verticale dudit élément d'engagement (20).

6. L'appareil (1) selon une ou plusieurs des revendications précédentes, **caractérisé en ce que** ledit corps de retenue (4a), pendant son mouvement le long dudit circuit de transport fermé (3), est maintenu à une hauteur fixe.

7. L'appareil (1) selon une ou plusieurs des revendications précédentes, **caractérisé en ce que** la partie inférieure du corps de retenue (4a) est disposée à une hauteur supérieure à la hauteur de disposition de la bouche de la préforme (51) entre ladite position de prélèvement et ladite position de libération.
